# EUROPEAN PATENT SPECIFICATION

(11) **EP 2 948 715 B1**
(45) Date of publication and mention of the grant of the patent: **17.04.2019**
(21) Application number: 14700852.8
(22) Date of filing: 15.01.2014
(51) Int. Cl.: F23R 3/36, F23R 3/14, F23R 3/28, F23R 3/34, F23D 14/70, B01F 5/06

(54) **BURNER SYSTEM HAVING TURBULENCE ELEMENTS**
BRENNERSYSTEM MIT TURBULENZELEMENTEN
SYSTÈME DE BRÛLEUR POSSÉDANT DES ÉLÉMENTS DE TURBULENCE

(30) Priority: 24.01.2013 US 201361756187 P
(43) Date of publication of application: 02.12.2015
(73) Proprietor: Siemens Aktiengesellschaft, 80333 München (DE)
(72) Inventor: BÖTTCHER, Andreas, 40822 Mettmann (DE); KOCK, Boris Ferdinand, 40878 Ratingen (DE); PRADE, Bernd, 45479 Mülheim (DE); RYAN, William R., Oviedo, FL 32765 (US); THACKWAY, Richard L., Oviedo, FL 32766 (US); VOGTMANN, Daniel, 40227 Düsseldorf (DE); WÖRZ, Ulrich, Fort Mill, SC 29708 (US); KÖSTLIN, Berthold, 47057 Duisburg (DE); TERJUNG, Lars, 47239 Duisburg (DE)
(86) International application number: PCT/EP2014/050651
(87) International publication number: WO 2014/114533

(56) References cited:
- EP-A1- 1 403 583
- EP-A1- 1 645 807
- EP-B1- 0 956 475
- DE-A1-102007 012 790
- US-A- 3 620 012
- US-A- 4 134 260
- US-A- 5 423 608
- US-A1- 2012 024 985

## Description

The invention relates to a burner system, especially for use in a gas turbine installation.

The mixing of fuel and air is of central importance to the combustion process. NOₓ and CO emissions, the thermoacoustic properties of the flame and also the shape and position of the flame are determined decisively by the quality of the mixing. In particular, a fuel/air mixture which is as homogeneous as possible leads in this context to low NOₓ emissions. What is more, however, the mixing also influences the thermoacoustic behavior of the burner. Acoustic excitations which are caused by the combustion process thus arise in the combustion chamber. These excitations are either damped or amplified, depending on their amplitude and frequency and also on the natural frequency of the combustion chamber structure. If the frequencies of the thermoacoustic oscillations coincide with the natural frequencies of the structure and are in phase therewith, large-amplitude mechanical oscillations arise, which can have a critical effect on the life of the components.

In the case of premix burner systems, for example also in pilot burner systems, the fuel is mixed into the surrounding airflow through small bores in the vanes of the swirler in order to improve the mixing of fuel and air.

EP 1 400 752 B1 discloses a perforated plate for producing a controlled pressure drop across the burner and for guiding the flow, this perforated plate being arranged at the inlet to the swirler (vane row) of the burner. This pressure drop is necessary in order to be able to bring about the cooling of the turbine blades in a controlled manner. This perforated plate is, however, not optimal in terms of fluid dynamics and does not necessarily produce an even flow onto the swirl vanes.

EP 0 956 475 B1 discloses a burner in which additional turbulence is generated by means of a multiplicity of flat and approximately equal-sized deflection.

US 2012 024985 A1 discloses a burner in which additional turbulence is generated by means of a multiplicity of flat elements having different sizes in the radial direction. This document discloses the preamble of claim 1.

The object of the invention is to provide a burner system, of the type mentioned in the introduction, which allows improved mixing of fuel and air and, simultaneously, is as simple and as cheap as possible to manufacture and to install.

The invention achieves this object in that it provides that, in the case of such a burner system, especially for use in a gas turbine, having an annular channel for the supply of combustion air, wherein the annular channel is formed by a hub and an outer casing and has an axis of symmetry, a fuel duct for the supply of fuel, a plurality of turbulence elements for generating highly turbulent combustion air and an inlet for fuel from the fuel duct into the annular channel downstream of the turbulence elements, wherein carrier elements of the turbulence elements extend in the radial direction from the hub to the outer casing and at least one wing is arranged on each of the carrier elements, the projection of a wing, which is arranged radially toward the outside with respect to the axis of symmetry, onto a cross-sectional area of the annular channel is greater than the projection of a wing which is arranged radially toward the inside with respect to the axis of symmetry.

Targeted arrangement of the wings (for example in a radially irregular manner) can force the production of local differences in mixing. These differences in mixing influence the acoustics and, where appropriate, can mitigate or suppress critical combustion modes. Radial differences in the effective cross section of the wings with respect to a flow of air in the annular channel give rise to a suitable area ratio between the mixer elements and the annular channel, and thus also improved and/or adjustable mixing of fuel and air with regard to combustion stability and lower emissions.

In order to generate more turbulence instead of swirl, it is expedient if each carrier element has at least two wings and, in particular, if the carrier elements have pairs of wings, in which the wings are arranged in an inclined manner in mutual opposition with respect to the cross-sectional area of the annular channel, such that in each case opposite localized swirl can be imparted to air flowing past said wings, resulting overall in increased turbulence.

In an expedient manner, the turbulence elements are arranged at an inlet into the annular channel.

According to the invention, the angle of attack of the wings varies over the circumference of the annular channel or in the radial direction. A different effective cross section can be achieved for the same size of wing by means of the irregular radial gradation, but also by means of a gradation on the circumference.

In an alternative advantageous embodiment, wings which are arranged radially further toward the outside have larger surfaces than wings which are arranged radially further toward the inside. Thus, even when the wings are at the same angle of attack, the area ratio of the mixer elements is adapted to the vane passage.

In a preferred configuration, the wings taper away from the carrier elements and, in particular, are trapezoidal or triangular in shape. This configuration achieves particularly intense turbulence.

It is further preferred that the turbulence elements are connected to one another on the hub side via an annulus. The annulus can be separated as required, so as to enable simple assembly and disassembly.

The burner is preferably configured in such a way that swirl vanes are arranged in the annular channel downstream of the turbulence elements. As a result, a turbulence element having the positive effects on the homogeneity of the mixing of fuel and combustion air is used in combination with swirl vanes, which have a positive effect on the stability of combustion.

Preferably, at least one of the swirl vanes is formed as a hollow vane, out of which fuel can be introduced into the annular channel. This configuration makes it possible to use an even injection of fuel from a swirl vane which is formed as a hollow vane, the effect of which is to further homogenize the fuel/air mixture in combination with the abovementioned advantages.

In a preferred configuration, the burner is formed as a pilot burner by means of which a pilot flame can be generated in order to maintain the combustion, wherein the wings are arranged on the carrier elements substantially from the inside to the middle, as seen in the radial direction. Particularly in the case of the pilot burner, the cross section of the annular channel is comparatively small, so that a comparatively deep fuel spray penetration is present in the pilot burner. It is therefore important, in particular radially toward the inside, that increased turbulence causes improved mixing of fuel and combustion air also in this region.

In another preferred configuration, the burner is formed as a main burner. The relative depth of penetration of the fuel into the air flow is less that in the case of the pilot burner, for which reason increased turbulence is used also radially toward the outside in order to achieve improved mixing. For this reason, the wings are arranged in a manner distributed on the carrier elements over the entire radial extent of the carrier elements.

Finally, an advantageous burner includes both a pilot burner system and a main burner system in accordance with the invention.

The invention will be explained in more detail by way of example with reference to the drawings, in which, schematically and not to scale:
- Figure 1: shows a burner having a main burner system and a pilot burner system in a highly schematized basic diagram;
- Figure 2: shows a side view of a main burner system having a perforated plate in accordance with the prior art;
- Figure 3: shows a static mixer having turbulence elements in accordance with the invention;
- Figure 4: shows a view in the direction of the axis of symmetry of a burner system in accordance with the invention;
- Figure 5: shows a view in the radial direction of the burner system; and
- Figure 6: shows a pilot burner system in accordance with the invention.

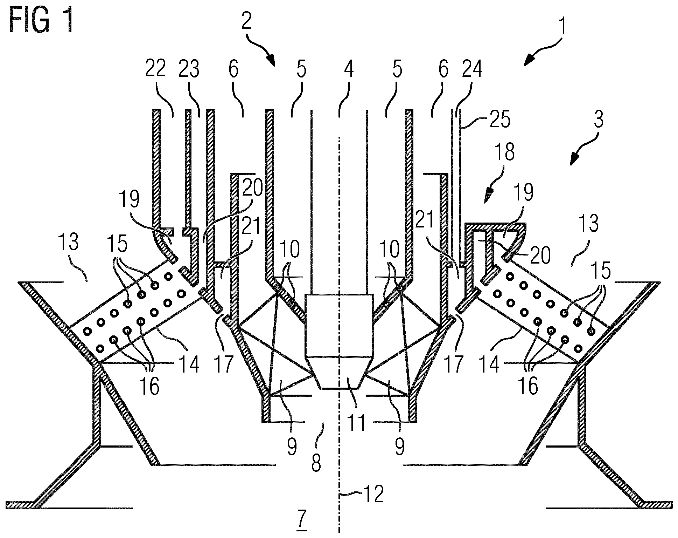

Figure 1 shows, schematically and by way of example, the burner 1 in accordance with the invention in a highly schematized basic diagram with reference to which the concept underlying the burner 1 is described.

The burner 1 in accordance with the invention which can be used for example in the combustion chamber of a gas turbine plant, where appropriate in combination with several burners of the same type, comprises an inner pilot burner system 2 and a main burner system 3 which surrounds the pilot burner system 2 concentrically. Both the pilot burner system 2 and the main burner system 3 can optionally be operated with gaseous and/or liquid fuels such as natural gas or fuel oil.

The pilot burner system 2 comprises, as fuel channels, an inner oil supply channel 4 and, concentrically surrounding this, an inner annular gas supply channel 5. This is, in turn, concentrically surrounded by an inner annular channel 6 for the supply of combustion air. In addition, a suitable ignition system (not shown in the figure) can be arranged in or on this annular channel 6. The pilot burner system 2 has an outlet opening 8 which faces a combustion chamber 7 and in the region of which swirl vanes 9 are arranged in the annular channel 6. The pilot burner system has two inlets for fuel: by means of nozzle openings 10, gas can be injected into the annular channel 6 from the inner gas supply channel 5 in the region of the swirl vanes 9 or upstream of the swirl vanes 9 (injection of the gas from the inner gas supply channel 5 can alternatively or in addition occur also by means of nozzles in the swirl vanes 9). Oil from the oil supply channel 4 can be injected into the supplied air and/or supplied inert substance downstream of the swirl vanes 9 by means of the oil nozzle 11.

The purpose of the pilot burner system 2 is to maintain stable combustion operation in the burner 1, since the latter is usually operated with a lean mixture which tends toward instabilities. The pilot burner system 2 can, in a manner known per se, be operated as a diffusion burner with oil and/or gas, whereby the fuel is injected directly into the flame. However, it is also possible to operate the pilot burner system 2 as a premix burner, whereby the fuel is thoroughly mixed with air before the mixture is supplied to the flame.

The main burner system 3 which surrounds the pilot burner system 2 comprises an annular channel 13 for the combustion air, which channel is radially toward the outside with respect to the axis of symmetry 12 of the burner systems 2, 3, and through which channel there extend a plurality of swirl vanes 14 of a swirl vane blading. These swirl vanes 14 have first gas nozzles 15 as fuel inlets and, where appropriate, as shown in figure 1, second gas nozzles 16, through which fuel gas can be injected into the air flowing in through the radially outer annular channel 13. Oil can additionally be injected into the air flowing through the annular channel 13 by means of oil nozzles 17 as a further inlet for fuel. Although the present exemplary embodiment relates to oil and oil nozzles, this is intended to be merely representative of suitable liquid fuels and corresponding nozzles.

The first gas nozzles 15 and second gas nozzles 16 which are located in the swirl vanes 14, and the oil nozzles 17, are supplied with fuel via a fuel supply arrangement, located radially toward the inside, having fuel channels, what is referred to as the hub 18. First and second annular gas distribution channels 19 and 20, which supply the gas nozzles 15 and 16 with gas, are arranged in this hub. Moreover, an annular oil distribution channel 21, which supplies the oil nozzles 17 with oil, is arranged in the hub 18. The fuel channels, that is to say the gas distribution channels 19, 20 and the oil distribution channel 21, are supplied with the appropriate fuel via gas supply channels 22, 23 and via an oil supply channel 24, respectively. The oil supply channel 24 has a dedicated oil supply pipe 25.

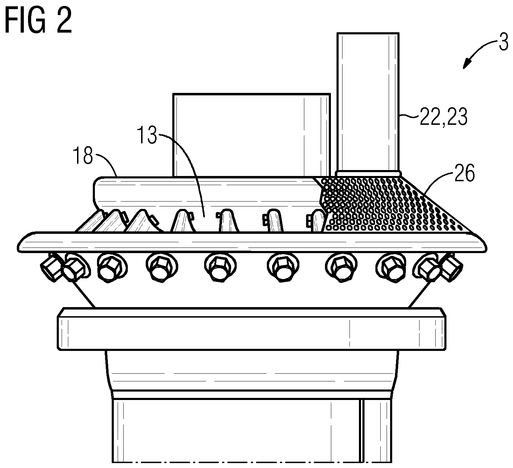

Figure 2 shows a perspective side view of a known main burner system 3 before installation into the combustion chamber. A perforated plate 26 having evenly spaced holes is arranged at the inlet of the annular channel 13 for combustion air of the main burner system 3 for the purpose of generating a controlled pressure drop over the main burner system 3 and for guiding the flow, the perforated plate 26 being only partially shown in figure 2. A perforated plate of this type is usually not provided in the pilot burner system 2, even though this is in principle conceivable.

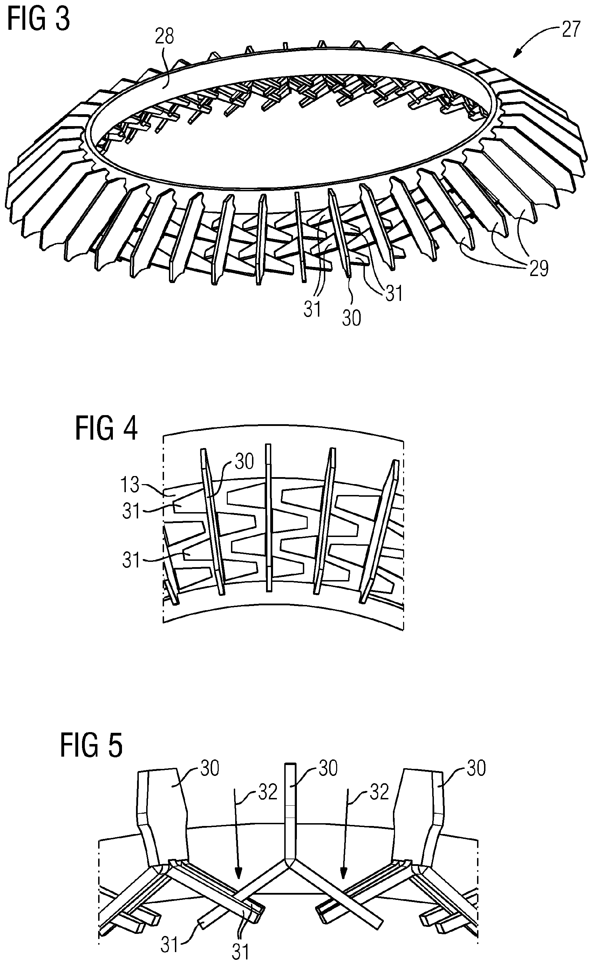

Figure 3 shows the static mixer 27 of a main burner system 3 in accordance with the invention. The static mixer 27 encompasses an annulus 28, on which turbulence elements 29 are arranged. The turbulence elements 29 consist in each case of one carrier element 30, on which individual or multiple wings 31 are arranged. In the preferred embodiment of figure 3, the wings 31 are arranged in pairs, in an inclined manner on the carrier elements 30 in mutual opposition with respect to the cross-sectional area of the annular channel 13. Fundamentally, the number of turbulence elements 29, the number of wings 31 per mixing element 29 or carrier element 30 and the shape and angle of attack of the wings 31 are determined by the mixing profile to be achieved and also by the pressure drop to be produced.

The static mixer 27 is arranged at the inlet to the annular channel 13 for the supply of combustion air, and imparts strong turbulence to the inflowing air, resulting in better mixing of air and fuel in the subsequent vane injection region.

In order to keep the area ratio of the static mixer 27 to the annular channel 6, 13 constant in the radial direction, the size of the wings 31 varies in the radial direction and can be adapted to the respective geometry of the annular channel 6, 13. As can be seen particularly clearly in figure 4, in a view parallel to the axis of symmetry 12 into the annular channel 13 of the main burner system 3, the annular channel 13 increases in size in the radially outward direction. The surface area of the respective wings 31 increases in a corresponding manner, the further out they are arranged on the carrier element 30. The wings 31 in figure 4 are trapezoidal in shape.

Figure 5 shows adjacent carrier elements 30 as seen in the radial direction. The direction of flow of the combustion air 32 is illustrated by means of arrows. The wings 31 of one carrier element 30 extend into the free space between the wings 31 of an adjacent carrier element 30.

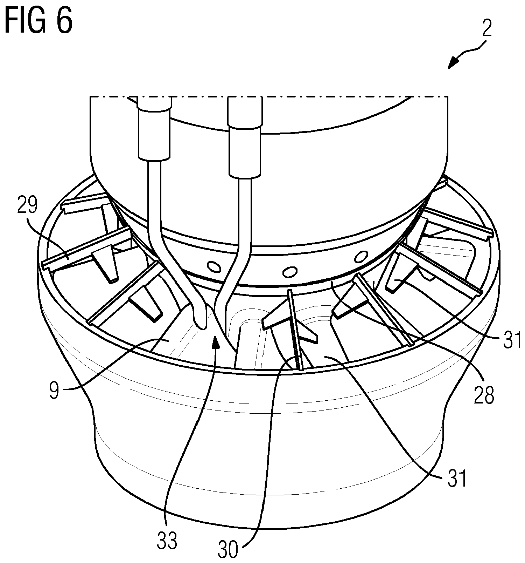

Figure 6 shows a pilot burner system 2 in accordance with the invention. The turbulence elements 29 are arranged in an offset manner with respect to the swirl vanes 9. No turbulence element 29 is provided at the point where the ignition device 33 is located. The annulus 28, by means of which the carrier elements 30 of the turbulence elements 29 are connected to one another, can be separated as required during installation. Figure 6 also shows that the wings 31 are arranged differently on the carrier elements, depending on their radial position.

## Claims

1. A burner system (2, 3), especially for use in a gas turbine, having an annular channel (6, 13) for the supply of combustion air, wherein the annular channel (6, 13) is formed by a hub (18) and an outer casing and has an axis of symmetry (12), a fuel duct (4, 5, 19, 20, 21) for the supply of fuel arranged in said hub (18), a plurality of turbulence elements (29) for generating highly turbulent combustion air and an inlet for fuel (10, 11, 15, 16, 17) from the fuel duct (4, 5, 19, 20, 21) into the annular channel (6, 13) downstream of the turbulence elements (29), wherein carrier elements (30) of the turbulence elements (29) extend in the radial direction from said hub (18) to the outer casing and at least one wing (31) is arranged on each of the carrier elements (30), wherein the projection of a wing (31), which is arranged radially toward the outside with respect to the axis of symmetry (12), onto a cross-sectional area of the annular channel (6, 13) is greater than the projection of a wing (31) which is arranged radially toward the inside with respect to the axis of symmetry (12), **characterized in that** an angle of attack of the wings (31) varies over the circumference of the annular channel (6, 13) or in the radial direction.

2. The burner system (2, 3) as claimed in claim 1, wherein each carrier element (30) has at least two wings (31).

3. The burner system (2, 3) as claimed in either of claims 1 and 2, wherein each carrier element (30) has pairs of wings, in which the wings (31) are arranged in an inclined manner in mutual opposition with respect to the cross-sectional area of the annular channel (6, 13).

4. The burner system (2, 3) as claimed in one of the preceding claims, wherein the turbulence elements (29) are arranged at an inlet into the annular channel (6, 13).

5. The burner system (2, 3) as claimed in one of the preceding claims, wherein wings (31) which are arranged radially further toward the outside have larger surfaces than wings (31) which are arranged radially further toward the inside.

6. The burner system (2, 3) as claimed in one of the preceding claims, wherein the wings (31) taper away from the carrier elements (30) and, in particular, are trapezoidal or triangular in shape.

7. The burner system (2, 3) as claimed in one of the preceding claims, wherein the turbulence elements (29) are connected to one another on the hub side via an annulus (28).

8. The burner system (2, 3) as claimed in one of the preceding claims, wherein swirl vanes (9, 14) are arranged in the annular channel (6, 13) downstream of the turbulence elements (29).

9. The burner system (2, 3) as claimed in claim 8, wherein at least one of the swirl vanes (9, 14) is formed as a hollow vane, out of which fuel can be introduced into the annular channel (6, 13).

10. The burner system (2) as claimed in one of the preceding claims, which is formed as a pilot burner system (2) and by means of which a pilot flame can be generated in order to maintain the combustion, wherein the wings (31) are arranged on the carrier elements (30) substantially from the inside to the middle, as seen in the radial direction.

11. The burner system (3) as claimed in one of claims 1 to 9, which is formed as a main burner system (3), wherein the wings (31) are arranged in a manner distributed on the carrier elements (30) over the entire radial extent of the carrier elements (30).

12. A burner (1) having at least one burner system (2, 3) as claimed in one of the preceding claims.

## Patentansprüche

1. Brennersystem (2, 3), insbesondere für den Einsatz in einer Gasturbine, mit einem Ringkanal (6, 13) für die Zufuhr von Verbrennungsluft, wobei der Ringkanal (6, 13) durch eine Nabe (18) und ein äußeres Gehäuse gebildet ist und eine Symmetrieachse (12) aufweist, einem in der Nabe (18) angeordneten Brennstoffkanal (4, 5, 19, 20, 21) für die Brennstoffzufuhr, mehreren Verwirbelungselementen (29) zur Erzeugung von stark turbulenter Verbrennungsluft und einem Einlass von Brennstoff (10, 11, 15, 16, 17) aus dem Brennstoffkanal (4, 5, 19, 20, 21) in den Ringkanal (6, 13) abströmseitig von den Verwirbelungselementen (29), wobei sich Trägerelemente (30) der Verwirbelungselemente (29) in radialer Richtung von der Nabe (18) zum äußeren Gehäuse erstrecken und auf den Trägerelementen (30) mindestens je ein Flügel (31) angeordnet ist, wobei die Projektion eines bezogen auf die Symmetrieachse (12) radial außen angeordneten Flügels (31) auf eine Querschnittsfläche des Ringkanals (6, 13) größer ist als die Projektion eines bezogen auf die Symmetrieachse (12) radial innen angeordneten Flügels (31), **dadurch gekennzeichnet, dass** ein Anstellwinkel der Flügel (31) über den Umfang des Ringkanals (6, 13) oder in radialer Richtung variiert.

2. Brennersystem (2, 3) nach Anspruch 1, wobei jedes Trägerelement (30) mindestens zwei Flügel (31) aufweist.

3. Brennersystem (2, 3) nach einem der Ansprüche 1 oder 2, wobei jedes Trägerelement (30) Flügelpaare aufweist, bei denen die Flügel (31) gegensinnig gegen die Querschnittsfläche des Ringkanals (6, 13) geneigt angeordnet sind.

4. Brennersystem (2, 3) nach einem der vorhergehenden Ansprüche, wobei die Verwirbelungselemente (29) an einem Eintritt in den Ringkanal (6, 13) angeordnet sind.

5. Brennersystem (2, 3) nach einem der vorhergehenden Ansprüche, wobei Flächen weiter radial außen angeordneter Flügel (31) größer sind als Flächen weiter radial innen angeordneter Flügel (31).

6. Brennersystem (2, 3) nach einem der vorhergehenden Ansprüche, wobei die Flügel (31) sich von den Trägerelementen (30) weg verjüngen und insbesondere eine Trapez- oder Dreiecksform aufweisen.

7. Brennersystem (2, 3) nach einem der vorhergehenden Ansprüche, wobei die Verwirbelungselemente (29) nabenseitig über einen Ring (28) miteinander verbunden sind.

8. Brennersystem (2, 3) nach einem der vorhergehenden Ansprüche, wobei abströmseitig von den Verwirbelungselementen (29) Drallschaufeln (9, 14) im Ringkanal (6, 13) angeordnet sind.

9. Brennersystem (2, 3) nach Anspruch 8, wobei mindestens eine der Drallschaufeln (9, 14) als Hohlschaufel ausgebildet ist, aus der Brennstoff in den Ringkanal (6, 13) einlassbar ist.

10. Brennersystem (2) nach einem der vorhergehenden Ansprüche, das als Pilotbrennersystem (2) ausgebildet ist, durch das eine Pilotflamme zur Aufrechterhaltung der Verbrennung erzeugbar ist, wobei die Flügel (31) im Wesentlichen radial innen bis zu einer radialen Mitte auf den Trägerelementen (30) angeordnet sind.

11. Brennersystem (3) nach einem der Ansprüche 1 bis 9, das als Hauptbrennersystem (3) ausgebildet ist, wobei die Flügel (31) über eine gesamte radiale Erstreckung der Trägerelemente (30) verteilt auf den Trägerelementen (30) angeordnet sind.

12. Brenner (1) mit mindestens einem Brennersystem (2, 3) nach einem der vorhergehenden Ansprüche.

## Revendications

1. Système (2, 3) de brûleur, à utiliser en particulier dans une turbine à gaz, ayant un canal (6, 13) annulaire pour l'alimentation en air de combustion, le canal (6, 13) annulaire étant formé par un moyeu (18) et par une enveloppe extérieure et ayant un axe de symétrie (12), un conduit (4, 5, 19, 20, 21) pour du combustible pour l'alimentation en combustible, disposé dans le moyeu (18), une pluralité d'éléments (29) de turbulence pour créer de l'air de combustion très turbulent et une entrée pour du combustible (10, 11, 15, 16, 17) allant du conduit (4, 5, 19, 20, 21) pour du combustible au canal (6, 13) annulaire, en aval des éléments (29) de turbulence, dans lequel des éléments (30) de support des éléments (29) de turbulence s'étendent dans la direction radiale du moyeu (18) à l'enveloppe extérieure et au moins une ailette (31) est disposée sur chacun des éléments (30) de support, la partie saillante d'une ailette (31), qui est disposée radialement vers l'extérieur par rapport à l'axe de symétrie (12) sur une surface de section transversale du canal (6, 13) annulaire, étant plus grande que la partie en saillie d'une ailette (31), qui est disposée radialement vers l'intérieur par rapport à l'axe de symétrie (12), **caractérisé en ce qu'**un angle d'attaque des ailettes (31) varie sur la circonférence du canal (6, 13) annulaire ou dans la direction radiale.

2. Système (2, 3) de brûleur suivant la revendication 1, dans lequel chaque élément (30) de support a au moins deux ailettes (31).

3. Système (2, 3) de brûleur suivant l'une des revendications 1 et 2, dans lequel chaque élément (30) de support a des paires d'ailettes, dans lequel les ailettes sont disposées d'une manière inclinée en opposition mutuelle par rapport à la surface de section transversale du canal (6, 13) annulaire.

4. Système (2, 3) de brûleur suivant l'une des revendications précédentes, dans lequel les éléments (29) de turbulence sont disposés à une entrée dans le canal (6, 13) annulaire.

5. Système (2, 3) de brûleur suivant l'une des revendications précédentes, dans lequel des ailettes (31), qui sont disposées radialement davantage vers l'extérieur ont des surfaces plus grande que des ailettes (31), qui sont disposées radialement davantage vers l'intérieur.

6. Système (2, 3) de brûleur suivant l'une des revendications précédentes, dans lequel les ailettes (31) sont coniques en s'éloignant des éléments (30) de support et, en particulier, sont de forme trapézoïdale ou triangulaire.

7. Système (2, 3) de brûleur suivant l'une des revendications précédentes, dans lequel les éléments (29) de turbulence sont assemblés un à l'autre du côté du moyeu, par l'intermédiaire d'un cerceau (28).

8. Système (2, 3) de brûleur suivant l'une des revendications précédentes, dans lequel des aubes (9, 14) de tourbillonnement sont disposées dans le canal (6, 13) annulaire, en aval des éléments (29) de turbulence.

9. Système (2, 3) de brûleur suivant la revendication 8, dans lequel au moins l'une des aubes (9, 14) de tourbillonnement est formée sous la forme d'une aube creuse, de laquelle du combustible peut être introduit dans le canal (6, 13) annulaire.

10. Système (2, 3) de brûleur suivant l'une des revendications précédentes, qui est sous la forme d'un système (2) de brûleur pilote et au moyen duquel une flamme pilote peut être produite, afin de maintenir la combustion, les ailettes (31) étant disposées sur les éléments (30) de support, sensiblement de l'intérieur vers le milieu, telles que vues dans la direction radiale.

11. Système (2, 3) de brûleur suivant l'une des revendications 1 à 9, qui est sous la forme d'un système (3) de brûleur principal, les ailettes (31) étant disposées d'une manière répartie sur les éléments (30) de support, sur toute l'étendue radiale des éléments (30) de support.

12. Brûleur (1) ayant au moins un système (2, 3) de brûleur tel que revendiqué à l'une des revendications précédentes.
